# EUROPÄISCHE PATENTANMELDUNG

(11) **EP 2 407 025 A2**
(43) Veröffentlichungstag der Anmeldung: **18.01.2012**
(21) Anmeldenummer: 11170737.8
(22) Anmeldetag: 21.06.2011
(51) Int. Cl.: A01G 1/00, A01G 7/00

(54) **Pflanzenbearbeitungsmaschine**

(30) Priorität: 12.07.2010 AT 11762010
(71) Anmelder: Dulnigg, Walter, 8020 Graz (AT)
(72) Erfinder: Dulnigg, Walter, 8020 Graz (AT)
(74) Vertreter: Röggla, Harald

(57) **Zusammenfassung**

Die Erfindung betrifft ein System (1) zur Bearbeitung, Pflege und zum Management von Pflanzen (2), wobei an zu bearbeitenden Pflanzen (2) ein Radio Frequency Identification (RFID) Tag (3) angebracht ist, und wobei eine Pflanzenbearbeitungsmaschine (4) zum Auslesen von in den Tags (3) gespeicherten Pflanzendaten einen RFID-Reader (5) und eine zugeordnete RFID-Antenne (6) aufweist, und wobei die Pflanzenbearbeitungsmaschine (4) in Abhängigkeit von den ausgelesen Pflanzendaten eines Tags (3) einer Pflanze (2) zum selektiven Aktivieren eines Arbeitsvorganges der Pflanzenbearbeitungsmaschine (4) für diese Pflanze (2) ausgebildet ist, und wobei die Pflanzenbearbeitungsmaschine (4) zumindest einen im Wesentlichen quer zur Fahrtrichtung von der Pflanzenbearbeitungsmaschine (4) abstehenden in einem Bearbeitungsabstand (BA1; BA2) zum Boden (10) im Wesentlichen parallel zum Boden (10) verlaufenden Ausleger (8, 9; 14, 15) aufweist, an dem eine Pflanzenbearbeitungseinrichtung (12, 13; 16, 17, 18) vorgesehene ist und an dem zumindest zwei zueinander in einem Antennenabstand (A) beabstandete RFID-Antennen (6) vorgesehen sind, und dass die Pflanzenbearbeitungsmaschine (4) in Abhängigkeit von den mit den beiden RFID-Antennen (6) ausgelesenen Pflanzendaten zum selektiven Aktivieren der Pflanzenbearbeitungseinrichtung (12, 13; 16, 17, 18) zur Durchführung des Arbeitsvorganges an der zu bearbeitenden Pflanze (2) und/oder zum Registrieren/Inventarisieren von ausgelesenen Pflanzdaten im System (1) ausgebildet ist.

## Beschreibung

Die Erfindung betrifft ein System zur Bearbeitung, Pflege und zum Management von Pflanzen, wobei an zu bearbeitenden Pflanzen ein Radio Frequency Identification (RFID) Tag angebracht ist und wobei eine Pflanzenbearbeitungsmaschine zum Auslesen von in den Tags gespeicherten Pflanzendaten einen RFID-Reader und eine zugeordnete RFID-Antenne aufweist und wobei die Pflanzenbearbeitungsmaschine in Abhängigkeit von den ausgelesen Pflanzendaten eines Tags einer Pflanze zum selektiven Aktivieren eines Arbeitsvorganges der Pflanzenbearbeitungsmaschine für diese Pflanze ausgebildet ist.

Das Dokument EP 1 762 135 A1 offenbart so ein System zur Bearbeitung, Pflege und Management von Pflanzen, wobei insbesondere Nadelbäume auf einer Plantage von kleinen Baum-Stecklingen bis zur Größe von verkaufbaren Christbäumen bearbeitet werden. Das System umfasst einen Traktor als Pflanzenbearbeitungsmaschine, der einen RFID-Reader aufweist. An einer Seite des Traktors ist die dem RFID-Reader zugeordnete RFID-Antenne angebracht, um die an den Christbäumen befestigten Tags kontaktlos auszulesen. An derselben Seite des Traktors ist eine Säge vorgesehen, mit der ein Christbaum abgeschnitten werden kann. Je nachdem, welche Pflanzendaten in dem Tag des Christbaums gespeichert und mit dem RFID-Reader ausgelesen werden, steuert eine Steuereinrichtung des RFID-Readers die Säge an, um den gewünschten Christbaum mit dem ausgelesenen Tag abzuschneiden bzw. zu beschneiden. Weiters ist in dem Dokument offenbart, dass je nachdem, welche Pflanzendaten ausgelesen werden, auch selektiv Christbäume gedüngt werden können.

Bei dem bekannten System hat sich als Nachteil erwiesen, dass die Pflanzen in relativ großen Abständen gesetzt werden müssen, damit der Traktor durch jede Pflanzenreihe fahren kann, um die Pflanzen selektiv zu bearbeiten. Hierdurch kann die bepflanzbare Fläche nicht optimal zur Bearbeitung möglichst vieler Pflanzen bewirtschaftet werden. Weiters hat sich das Abfahren jeder einzelnen Pflanzenreihe zur selektiven Bearbeitung nur einzelner Pflanzen als zeit- und kostenintensiv herausgestellt. Weiters hat sich das Abfahren jeder einzelnen Pflanzenreihe zur selektiven Bearbeitung einzelner Pflanzen insofern als Nachteil erweisen, da durch das Gewicht des Traktors der Untergrund - speziell bei feuchtem Wetter - uneben und matschig wird, was wiederum zu einer Beschmutzung der Christbäume durch die Räder des Traktors führt. Weiters ist bei dem bekannten System der Nachteil gegeben, dass eine Inventur der auf der Plantage befindlichen Pflanzen nur schwer und aufwendig durchführbar ist.

Der Erfindung liegt die Aufgabe zugrunde ein System zur Bearbeitung, Pflege und Management von Pflanzen zu schaffen, bei dem die vorstehend angegebenen Nachteile vermieden werden.

Erfindungsgemäß wird diese Aufgabestellung dadurch gelöst, dass die Pflanzenbearbeitungsmaschine zumindest einen im Wesentlichen quer zur Fahrtrichtung von der Pflanzenbearbeitungsmaschine abstehenden, in einem Bearbeitungsabstand zum Boden, im Wesentlichen parallel zum Boden verlaufenden Ausleger aufweist, an dem eine Pflanzenbearbeitungseinrichtung vorgesehen ist und an dem zumindest zwei zueinander in einem Antennenabstand beabstandete RFID-Antennen vorgesehen sind, und dass die Pflanzenbearbeitungsmaschine in Abhängigkeit von den mit den beiden RFID-Antennen ausgelesenen Pflanzendaten zum selektiven Aktivieren der Pflanzenbearbeitungseinrichtung zur Durchführung des Arbeitsvorganges an der zu bearbeitenden Pflanze und/oder zum Inventarisieren von ausgelesenen Pflanzendaten im System ausgebildet ist.

Hierdurch ist der Vorteil erhalten, dass die Pflanzenbearbeitungsmaschine mit ihrem Ausleger mehrere Pflanzenreihen überspannt und Pflanzen in diesen Pflanzenreihen parallel oder selektiv bearbeiten kann. Durch das Vorsehen von zumindest zwei oder mehreren zueinander beabstandeten RFID-Antennen auf dem Ausleger ist der Vorteil erhalten, dass der gesamte Bereich unter dem Ausleger durch die Lesereichweiten der RFID-Antennen abgedeckt wird und somit sämtliche an den Pflanzen unter dem Ausleger befindlichen Tags ausgelesen werden können. Folglich kann die Pflanzenbearbeitungseinrichtung auf dem Ausleger selektiv zur Durchführung eines Arbeitsvorganges aktiviert oder deaktiviert werden. Es muss somit beispielsweise nur jede dritte oder fünfte Pflanzenreihe breiter ausgelegt bzw. durchfahren werden, damit die Pflanzenbearbeitungsmaschine durchfahren kann, wodurch der Ertrag der Plantage gesteigert wird. Weiters wird weniger Matsch und Verschmutzung der Pflanzen durch die Pflanzenbearbeitungsmaschine erzeugt und der Arbeitsprozess erheblich beschleunigt und kostenoptimiert wird.

Mit der gleichen Pflanzenbearbeitungsmaschine kann aber auch eine Inventur der Pflanzen auf der Plantage durchgeführt werden, wobei alle ausgelesenen Pflanzendaten gespeichert und mit einer zentralen Logistikstelle mittels Funk synchronisiert werden. Hierbei können Pflanzendaten, die in dem System noch nicht registriert waren, auch gleich neu registriert werden. Hierdurch werden Kosten und Arbeitszeit gespart, da man mit nur einmaligem Durchfahren einer Pflanzenreihe, Pflanzen mehrerer Pflanzenreihen selektiv bearbeiten und die Pflanzen in den Pflanzenreihen inventarisieren, und wenn nötig auch neu registrieren, kann.

Wenn die Pflanzenbearbeitungsmaschine zum Spritzen von Düngemittel oder von Schädlingsbekämpfungsmittel genutzt werden soll, dann hat es sich als vorteilhaft erwiesen, an dem Ausleger mehrere Abgabeeinheiten, beziehungsweise Spritzdüsen, vorzusehen. Die Spritzdüsen werden selektiv dann aktiviert, wenn mit der in unmittelbarer Nähe der Spritzdüse angebrachten RFID-Antenne ein Tag ausgelesen wurde, entsprechend dessen Pflanzendaten der Arbeitsvorgang des Düngens oder Bespritzens mit Schädlingsbekämpfungsmittel vorgesehen ist.

Wenn die Pflanzenbearbeitungsmaschine zum Beschneiden oder zum Abschneiden von Pflanzen genutzt werden soll, dann hat es sich als vorteilhaft erwiesen, an dem Ausleger mehrere Schneideinrichtungen beziehungsweise Schnittwerkzeuge, also beispielsweise einfahrbare Sägen, vorzusehen. Die Sägen werden selektiv dann aktiviert, wenn mit der in unmittelbarer Nähe der Säge angebrachten RFID-Antenne ein Tag ausgelesen wurde, entsprechend dessen Pflanzendaten der Arbeitsvorgang des Beschneidens oder Abschneidens vorgesehen ist.

Besonders vorteilhaft ist es an einem Ausleger mit Schneideinrichtungen RFID-Antennen mit einer Richtcharakteristik vorzusehen, mit denen die Position des Tags einer Pflanze, die beschnitten oder abgeschnitten werden soll, genau zu detektieren. Diese Positionsinformation kann dann von der Schneideinrichtung dazu genutzt werden, um die Säge der Schneideinrichtung in Abhängigkeit des Stamms der Pflanze oder der Äste der Pflanze zu positionieren.

Vorteilhaft ist es weiters, die RFID-Antennen an dem Ausleger in einem Multiplexverfahren von nur einem RFID-Reader anzusteuern. Hierdurch wird eine kostengünstige Lösung erhalten.

Die mit der Pflanzenbearbeitungsmaschine erzielbare Effizienz kann noch weiter gesteigert werden, wenn an beiden Seiten der Pflanzenbearbeitungsmaschine Ausleger mit RFID-Antennen mit der selektiv aktivierbaren Pflanzenbearbeitungseinrichtung vorgesehen sind.

Durch das Anbringen der Tags im Wesentlichen in der oberen Hälfte der Pflanzen ist der Vorteil erhalten, dass man mit den Auslegern - je nach aktueller Höhe der Pflanzen - immer über die Spitze oder Wipfel der Pflanzen fährt und auch eine relativ begrenzte Lesereichweite der RFID-Antennen ausreicht, um die Tags zuverlässig auslesen zu können. Die Tags werden somit unabhängig von der Größe der Pflanzen zuverlässig ausgelesen. Besonders vorteilhaft ist hierbei, dass die Lesereichweite nicht bis zum Boden reicht und somit von den Pflanzen abgefallene oder vom Markierer (Mitarbeiter, der die Pflanzen mit den Tags markiert) ausgestreute und am Boden liegende Tags nicht ausgelesen werden. Hierdurch ist vermieden, dass am Boden liegende Tags als noch auf der Plantage befindliche Pflanzen identifiziert werden, wodurch eine Inventur der auf der Plantage befindlichen Pflanzen eindeutig und besonders zuverlässig durchführbar ist.

Um mit möglichst wenigen RFID-Antennen einen möglichst großen Lesebereich auf den Auslegern abdecken zu können ist es vorteilhaft, den Antennenabstand so festzulegen, dass sich die Lesereichweiten der RFID-Antennen in der Höhe der auszulesenden Tags zumindest geringfügig überlappen, um zuverlässig alle an den Pflanzen befestigten Tags auszulesen. Die Lesereichweite der RFID-Antenne hängt unter anderem von der gewählten Antennenform und von der gewählten Übertragungsfrequenz im LF, HF- oder UHF-Frequenzbereich ab. Weiters kommt es darauf an, in welchem Bearbeitungsabstand vom Boden die Ausleger eingestellt sind und wie hoch die Pflanzen bereits sind, denn beide Faktoren haben einen Einfluss auf den Abstand zwischen den RFID-Antennen und den auszulesenden Tags an den Pflanzen.

Als vorteilhaft hat es sich auch erwiesen, Positionsbestimmungsmittel, also beispielsweise einen GPS-Empfänger, an der Pflanzenbearbeitungsmaschine oder dem Ausleger vorzusehen. Als besonders vorteilhaft hat sich aber gezeigt, mehrere GPS-Empfänger jeweils den RFID-Antennen zugeordnet an den Auslegern anzubringen. Hierdurch ist der Vorteil erhalten, dass bei einer Inventur der Pflanzen auf der Plantage auch jeweils die Position der einzelnen Pflanze abgespeichert wird. Bei der Inventur wird hierfür ermittelt, welche Tags, beziehungsweise welche Pflanzen, von den RFID-Antennen während der Fahrt durch die Plantage detektiert werden und die ausgelesenen Pflanzendaten werden gemeinsam mit den im Wesentlichen zeitgleich ausgelesenen GPS-Positionsdaten abgespeichert. Mit diesen gesammelten Daten kann beispielsweise eine Liste der auf der Plantage befindlichen Pflanzen erstellt werden, wobei in dieser Liste zusätzlich angegeben ist, wo sich die einzelne Pflanze genau befindet bzw. welchem Plantagenabschnitt die Pflanze zugeordnet ist. Ebenso könnte ein Plan der Plantage dargestellt oder ausgedruckt werden, in dem alle aktuell auf der Plantage befindlichen Pflanzen bzw. nur der mit RFID Etiketten (enthalten die Tags) markierten (= zum Verkauf vorbereiteten) Pflanzen eingezeichnet sind. Dies hat weiters den Vorteil, dass online zu jedem Zeitpunkt des Erntevorganges abgerufen werden kann, wie viele Pflanzen einer gewissen Klasse geerntet worden sind und wie viele Pflanzen sich noch in dem Plantageabschnitt befinden, die noch geerntet werden müssen. Damit bekommt der Plantagebesitzer eine genaue Produktübersicht während der Erntesaison.

Weitere vorteilhafte Ausgestaltungen des erfindungsgemäßen Systems werden im Folgenden anhand der Figuren näher erläutert.
Figur 1 zeigt einen Traktor mit Auslegern zum selektiven Düngen und Inventarisieren von Bäumen/Pflanzen.
Figur 2 zeigt einen Traktor mit Auslegern zum selektiven Schneiden von Bäumen, wobei zusätzlich GPS-Empfänger für eine Positionsgenaue Inventur vorgesehen sind.

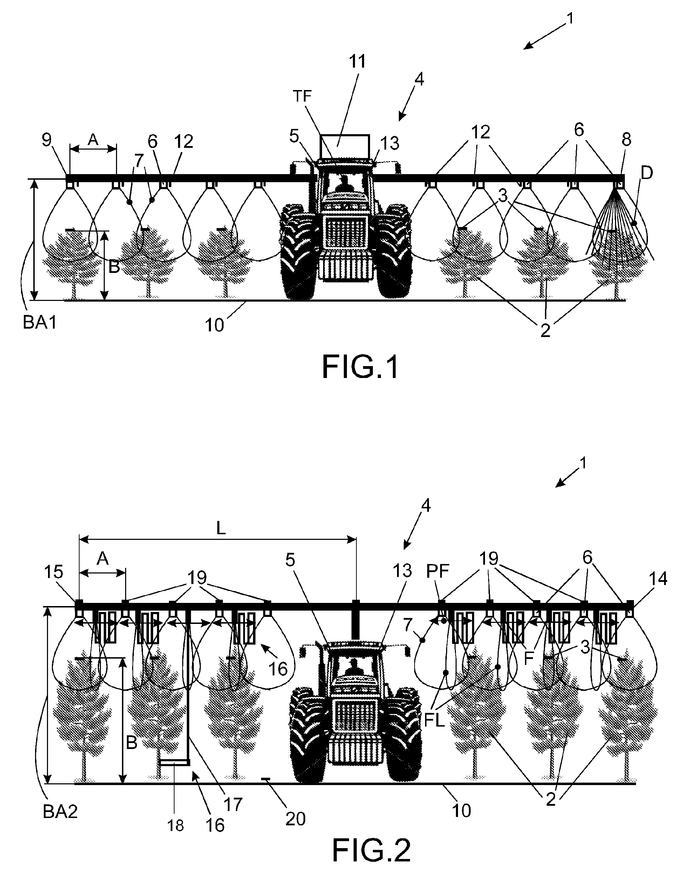

Figur 1 zeigt ein System 1 zur Bearbeitung, Pflege und zum Management von Pflanzen einer Plantage. Auf der Plantage werden Stecklinge kleiner Bäume 2 eingepflanzt und über mehrere Jahre gepflegt, um die Bäume 2 in der gewünschten Größe von beispielsweise 1,5m bis 3m Höhe abzuschneiden und als Christbäume zu verkaufen. Auf solch einer Plantage könnten aber auch andere Pflanzen, wie beispielsweise Buchsbäume oder Laubbäume, bearbeitet werden.

Bei dem System 1 gemäß Figur 1 wird jeder Baum 2 mit einem Radio Frequency Identification (RFID) Tag 3 gekennzeichnet. Jeder der Tags 3 weist einen Speicher zum Speichern von Pflanzendaten auf, die kontaktlos von einem RFID-Reader ausgelesen werden können. Die RFID Technologie ist seit langem bekannt, weshalb hierauf nicht näher eingegangen ist. Als Pflanzendaten können beispielsweise folgende Daten in dem Tag 3 gespeichert werden: Datum, an dem der Steckling eingepflanzt wurde; Größe des Stecklings beim Einpflanzen; Art der Pflanze; Herkunft der Pflanze; Kunde, für den die Pflanze gepflegt wird. In jedem Tag 3 ist aber auf jeden Fall ein unverwechselbar eindeutiger Produkt - Code als Pflanzendaten gespeichert, anhand der jeder Tag 3 eindeutig identifiziert werden kann.

Das System 1 weist weiters einen in den Figuren nicht dargestellten Computer auf, in dem ebenfalls die Pflanzendaten der in dem System 1 verwendeten Tags 3 gespeichert sind. Tags 3, deren Pflanzdaten in dem Computer gespeichert sind, sind in dem System 1 registrierte Tags. Je nach Implementierung des Systems 1 können im Tag 3 sämtliche relevanten Pflanzendaten oder auch nur der eindeutige Produkt-Code als Minimalvariante der Pflanzendaten gespeichert sein. Bei dieser Minimalvariante sind sämtliche Pflanzendaten einer registrierten Pflanze dann auf jeden Fall in dem Computer gespeichert. Es genügt somit, dass der Tag 3 durch seinen eindeutigen Produkt-Code eindeutig identifiziert werden kann, um die restlichen Pflanzendaten aus dem Computer zu ermitteln.

Das System 1 beinhaltet zusätzlich einen Traktor 4 als Pflanzenbearbeitungsmaschine, mit dem Arbeitsvorgänge wie Düngen, Spritzen oder Be-/Abschneiden der Bäume 2 durchgeführt werden können. Der Traktor 4 weist einen RFID-Reader 5 und insgesamt zehn dem RFID-Reader 5 zugeordnete RFID-Antennen 6 auf. Jede RFID-Antenne 6 hat eine gewisse Lesereichweite 7, in der von der RFID-Antenne 6 ein elektromagnetisches Feld mit ausreichend großer Feldstärke abgegeben wird, um in der Lesereichweite 7 befindliche passive Tags 3 auszulesen. Der RFID-Reader 5 nutzt die zehn RFID-Antennen 6 in einem Multiplexverfahren, bei dem der RFID-Reader 5 eine RFID-Antenne 6 nach der anderen ansteuert, um zu ermitteln, ob sich innerhalb der Lesereichweite 7 der jeweiligen RFID-Antenne 6 ein Tag 3 befindet. Antwortet ein Tag 3 auf die Anfrage des RFID-Readers 5, dann werden die gespeicherten Pflanzendaten, also zumindest der Produkt-Code, des Tags 3 ausgelesen und in dem RFID-Reader 5 zur weiteren Verarbeitung gespeichert.

Der Traktor 4 weist nunmehr weiters zwei Ausleger 8 und 9 auf, die quer zur Fahrtrichtung des Traktors 4 in einem Bearbeitungsabstand BA1, zum Erdniveau beziehungsweise Boden 10, parallel zum Boden 10 verlaufen. Auf den Auslegern 8 und 9 sind die zehn RFID-Antennen 6 angebracht, wobei sie zueinander jeweils in einem Antennenabstand A beabstandet befestigt sind. Hierdurch überlappen die Lesereichweiten 7 der RFID-Antennen 6 in dem Bereich unter den Auslegern 8 und 9, in dem die Tags 3 an den Bäumen 2 befestigt sind.

Der Traktor 4 mit den Auslegern 8 und 9 ist zum Düngen einzelner Bäume 2 vorgesehen und ausgebildet. Hierfür weist der Traktor einen Tank 11 auf, in dem flüssiger Dünger enthalten ist. An den Tank 11 ist eine Pflanzenbearbeitungseinrichtung angeschlossen, die durch zehn Spritzdüsen 12, Schlauchverbindungen zu dem Tank 11 und einer Steuereinrichtung 13 für die Spritzdüsen 12 gebildet ist. Mit der Steuereinrichtung 13 können einzelne oder auch alle der Spritzdüsen 12 zum Spritzen des Düngers geöffnet und wieder geschlossen werden. Da in diesem Ausführungsbeispiel der Spritzbereich D einer Spritzdüse 12 etwa mit der Lesereichweite 7 der RFID-Antenne 6 übereinstimmt, ist jeder RFID-Antenne 6 genau eine der Spritzdüsen 12 zugeordnet.

Gemäß einem Anwendungsbeispiel des Systems 1 ist angenommen, dass 200 Stück Bäume 2 unterschiedlicher Baumarten mit einem Alter von vier Jahren, beziehungsweise einer Größe von zumindest 2,5 Metern, bei der Plantage bestellt wurden. Die Lieferung soll in drei Monaten erfolgen. Diese Bäume 2 sollen nunmehr noch einmal gezielt gedüngt werden, damit sie in drei Monaten besonders grüne Nadeln haben.

Gemäß der in dem Computer gespeicherten Liste aller Bäume 2 auf der Plantage werden die 200 geeigneten Bäume 2 ausgesucht, wobei allgemein übliche Suchkriterien in Datenbanken verwendet werden. Die eindeutigen Produkt-Codes der Tags 3 der ausgewählten Bäume 2 werden von dem Computer in einem Speichermedium (z.B. USB-Stick, SD-Karte,...) gespeichert, das der Traktorfahrer TF vor Arbeitsbeginn erhält bzw. werden diese per Funk (z.B. GSM) von der Zentrale zum Traktor übertragen. Der Traktorfahrer TF steckt dieses Speichermedium in die Steuereinrichtung 13 der Pflanzenbearbeitungseinrichtung und beginnt damit, die Pflanzenreihen der Plantage abzufahren. Die Ausleger 8 und 9 reichen jeweils über z.B. drei Pflanzenreihen, wobei in jeder der Pflanzenreihen Bäume 2 hintereinander in einer Reihe gepflanzt sind. Der RFID-Reader 5 steuert eine RFID-Antenne 6 nach der anderen RFID-Antenne 6 an, liest den eindeutigen Produkt-Code der Tags 3 der Bäume 2 kontinuierlich aus und speichert diese. Die Steuereinrichtung 13 vergleicht nunmehr die von dem RFID-Reader 5 ausgelesenen Seriennummern mit den auf dem Speichermedium gespeicherten bzw. per Funk übertragenen Produkt-Codes der Tags 3, die gedüngt werden sollen. Wenn die Steuereinrichtung 13 eine Übereinstimmung feststellt, dann steuert sie jene Spritzdüse 12 zum Verspritzen des Düngers an, die der RFID-Antenne 6 zugeordnet ist, die die Seriennummer des Tags 3 ausgelesen hat. Hierdurch ist der Vorteil erhalten, dass selektiv gerade jene 200 Bäume der Plantage gedüngt werden, die in drei Monaten geschnitten werden sollen.

Bei einer einfacheren Ausführungsvariante des Systems wäre es auch möglich, dass sämtliche Spritzdüsen 12 an einem der Ausleger 8 oder 9 angesteuert werden, um Dünger zu verspritzen, wenn von nur einer der RFID-Antennen 6 auf diesem Ausleger 8 oder 9 ein Tag 3 mit einer Seriennummer ausgelesen wurde, der mit den gespeicherten Produkt-Codes der Tags 3 übereinstimmt. In diesem Fall würden voraussichtlich auch Bäume 2 gedüngt werden, die nicht oder noch nicht gedüngt werden müssten, dafür könnte die Pflanzenbearbeitungseinrichtung besonders einfach mit nur einen Schlauch von dem Tank 11 zu den Spritzdüsen 12 des Auslegers 8 und 9 ausgeführt werden.

In Figur 2 ist der Traktor 4 gemäß Figur 1 dargestellt, wobei er zum Schneiden der Bäume 2 umgebaut wurde. Hierfür wurde der Tank 11 entfernt und zwei andere Ausleger 14 und 15 montiert, auf denen als Pflanzenbearbeitungseinrichtung jeder RFID-Antenne 6 zugeordnet eine Schneideinrichtung 16 vorgesehen ist. Je Ausleger 14 und 15 sind vier Schneideinrichtungen 16 den fünf RFID-Antennen 6 zugeordnet, wobei den äußeren beiden RFID-Antennen 6 je Ausleger 14 oder 15 jeweils die gleiche Schneideinrichtung 16 zugeordnet ist. Die Schneideinrichtungen 16 weisen einen ausklappbaren Arm 17 und eine Säge 18 auf. Die Steuereinrichtung 13 ist zum Ausklappen des Arms 17 und zum Betätigen der Säge 18 ausgebildet, um Bäume 2 abzuschneiden.

Die Schneideinrichtungen 16 weisen nunmehr weiters je eine Ferritantenne F auf, die sich durch eine besondere Richtcharakteristik des abgegebenen elektromagnetischen Feldes auszeichnen. Diese Richtcharakteristik ist dadurch gegeben, dass der Lesebereich FL als sehr schmale Keule/schmaler Zylinder ausgebildet ist. Die Ferritantennen F sind auf dem Ausleger 14 und 15 horizontal in Pfeilrichtung PF verschiebbar angeordnet, wobei ein Motor die jeweilige Ferritantenne F entsprechend einer Steuerinformation der Steuereinrichtung 13 in ihrer horizontalen Position verstellt.

Gemäß vorstehendem Anwendungsbeispiel ist angenommen, dass nun die 200 Stück Bäume 2 beschnitten und/oder geschnitten und geliefert werden sollen. Der Traktorfahrer TF nimmt neuerlich die auf dem Speichermedium gespeicherten Seriennummern der 200 Bäume 2 der Bestellung vor drei Monaten und steckt es in die Steuereinrichtung 13, des zum Schneiden von Bäumen 2 umgebauten Traktors 4. Hierauf justiert er die Höhe der Ausleger 14 und 15 auf die Bearbeitungshöhe BA2, um mit den eingeklappten Armen 17 nicht an Baumwipfeln anzustreifen und trotzdem nahe genug mit den RFID-Antennen 6 an den Tags 3 entlangzufahren, damit die Lesereichweite 7 ausreicht, um sicher alle an den Bäumen 2 befestigten Tags 3 auszulesen.

Hierauf fährt der Traktorfahrer TF neuerlich durch die Pflanzenreihen und der RFID-Reader 5 liest mittels der RFID-Antenne R sämtliche Tags 3 innerhalb der Lesereichweite 7 aus. Wenn der Vergleich der von dem RFID-Reader 5 ausgelesenen Seriennummern mit den in dem USB-Stick gespeicherten Seriennummern eine Übereinstimmung ergibt, dann steuern die Steuereinrichtung 13 die Schneideinrichtung 16 derart an, dass der Arm 17 ausfährt und die Säge 18 den selektierten Baum 2 knapp über dem Boden 10 absägt oder beschneidet. Zum Detektieren der exakten Position des Stammes des abzuschneidenden/zu beschneidenden Baumes 2 legt der RFID-Reader 5 vor dem Ab-/Beschneiden den Baumes 2 ein elektromagnetisches Feld an die Ferritantenne F der Schneideinrichtung 16 und die Steuereinrichtung 13 verändert die horizontale Position der Ferritantenne F in Pfeilrichtung PF so lange, bis der gespeicherte Produkt-Code fehlerfrei und mit maximaler "Rücksignalstärke" des Tags 3 vom Leser empfangen wurde. Da dies nur in dem schmalen / zylindrischen Lesebereich FL möglich ist, kennt die Steuereinrichtung 13 hierdurch die exakte Position des Tags 3 und somit auch die exakte Position des Stammes des abzuschneidenden/zu beschneidenden Baumes 2. Mit dieser Information kann die Steuereinrichtung 13 die Schneideinrichtung 16 zum Abschneiden/Beschneiden des Baumes 2 besonders genau steuern, was in der Praxis große Vorteile mit sich bringt, da der Stand der Technik nur eine manuelle, zeitaufwendige und ungenaue Positionierung des Schnittwerkzeuges ermöglicht.

Hierdurch ist der Vorteil erhalten, dass am Computer ausgewählte Bäume 2 von dem Traktor 4 selektiert und genau abgeschnitten/beschnitten werden, wobei nur ein Traktorfahrer durch die Pflanzenreihe fahren muss und zusätzliche Personen zur manuellen Aktivieren und Ansteuerung des Schnittwerkzeuges am Traktor eingespart werden können.

Pflanzen können auf unterschiedliche Weise für einen Arbeitsvorgang durch die Pflanzenbearbeitungsmaschine ausgewählt werden. Beispielweise könnten mit dem Computer durch einen automatischen Suchvorgang alle Bäume 2 selektiert werden, die vor 3 Jahren gepflanzt wurden. Oder es könnten alle Bäume 2 selektiert werden, die einer bestimmten Baumart angehören oder es könnten alle Laubbäume selektiert werden. Je nach gewünschten Auswahlmöglichkeiten würden die entsprechenden Informationen als Pflanzendaten im Computer und/oder in den Tags 3 an den Bäumen 2 gespeichert werden. Sobald die Bäume 2 für einen Arbeitsvorgang ausgewählt wurden und eine entsprechende Liste an n Produkt-Codes der Steuereinrichtung 13 zugeführt wurde, kann der gewünschte Arbeitsvorgang an den ausgewählten Bäumen 2 durchgeführt werden.

Besonders vorteilhaft ist das System 1 anwendbar, wenn die Ausleger eine ausreichend große Länge L aufweisen. Ausleger mit 5m, 10m oder gar 20m Länge überspannen bereits mehrere Pflanzenreihen, weshalb hierdurch Zeit, Kosten und Matsch/Beschmutzung/Beschädigung durch den Traktor bei der Pflanzenbearbeitung eingespart werden können.

Vorteilhaft ist es auch, die Tags 3 in der oberen Hälfte des der Bäume 2 beziehungsweise an den Baumwipfeln zu befestigen und die Lesereichweite 7 der RFID-Antennen 6 so einzustellen, dass diese nicht bis zum Boden 10 reicht. Hierdurch ist der Vorteil erhalten, dass ein von einem Baum 2 heruntergefallener Tag 20 bzw. vom Markierer fallen gelassene/ausgestreute Tags 20 von dem RFID-Reader 5 nicht ausgelesen werden, wodurch eine exakte Inventur der verfügbaren Pflanzenprodukte gewährleistet ist. Der derzeitige Stand der Technik löst das Problem dadurch, dass die verschiedenen Markierer manuell angeben, wie viele Etiketten sie in welchem Plantagesegment befestigt haben. Dabei kommt es zu gravierenden Ungenauigkeiten z.B. durch verloren gegangene Etiketten oder unexakten manuellen Aufzeichnungen. Die Erfindung ermöglicht darüber hinaus, eine genaue Kontrolle und Leistungsüberwachung der Markierer.

Es sei festgestellt, dass die Tags 3 sehr fest mittels eines Kunststoffanhängers oder RFID-Etikett an den Bäumen 2 befestigt sind und praktisch nicht herunterfallen können. Dies kann jedoch beim Absägen eines Baumes 2 vorkommen, weshalb durch die nicht bis zum Boden 10 reichenden Lesereichweiten 7 unnötige Arbeitsvorgänge vermieden werden.

Besonders vorteilhaft ist es auch die Aufhängung der Ausleger so auszuführen, dass der Bearbeitungsabstand eingestellt werden kann, um die an der Spitze der Wipfel der Bäume 2 befestigten Tags 3, unabhängig von der jeweiligen Baumhöhe B, zuverlässig auslesen zu können. Der Traktorfahrer kann dies während der Fahrt hydraulisch und/oder pneumatisch durchführen.

Vorteilhaft an dem System 1 und dem Traktor 4 ist nunmehr weiter, dass beim Abfahren der Pflanzenreihen der Plantage, um ausgewählte Bäume 2 zu bearbeiten, alle von den RFID-Antennen 6 ausgelesenen Pflanzdaten mit Hilfe des RFID-Reader 5 gespeichert werden. Diese Liste der Pflanzdaten alle auf der Plantage befindlichen Tags 3 beziehungsweise Bäume 2 ist eine Inventur-Liste, die einen aktuellen Überblick über die auf der Plantage befindlichen Bäume 2 gibt. Auf diese Weise wird somit einfach und ohne Mehrkosten, bei jedem Durchfahren der Plantage mit dem Traktor 4 eine Inventur der Bäume 2 durchgeführt. Es werden sämtliche Pflanzendaten aller stehenden - also lebenden - Bäume 2 gespeichert. Diese Inventurdaten können von dem RFID-Reader 5 an den Computer übertragen (z.B. USB-Stick oder anderes Speichermedium oder per Funk,...) und in diesem weiter verarbeitet werden.

Besonders vorteilhaft ist es Positionsbestimmungsmittel, also insbesondere mehrere GPS-Empfänger 19, jeweils an im Wesentlichen derselben Position wie die RFID-Antennen 6 an den Auslegern 14 und 15 anzubringen, wie dies in Figur 2 dargestellt ist. Die GPS-Empfänger 19 sind mit dem RFID-Reader 5 verbunden, der von den RFID-Antennen 6 ausgelesene Pflanzendaten (z.B. Produkt-Code: 223453245) gemeinsam mit an dem zugehörigen GPS-Empfänger 19 ausgelesene GPS-Positionsdaten (GPS: 16.252 O / 48.178 N) zugeordnet speichert. Hierdurch ist der Vorteil erhalten, dass der Traktor 4 nur einmal durch die Pflanzreihen der Plantage fahren muss, um eine Inventur der Bäume 2 auf der Plantage mit ihrer aktuellen Position in der Plantage durchzuführen. Hierdurch ist eine besonders einfache und zuverlässige Möglichkeit der Inventur der Pflanzen in einer Plantage erhalten.

Gemäß einen weiteren Ausführungsbeispiel der Erfindung ist angenommen, dass die Bäume in der Plantage erst dann registriert werden, wenn sie eine geeignete Größe und Wuchs für den Verkauf erreicht haben. So könnten beispielsweise im Sommer Arbeiter durch die Plantage gehen und RFID-Etiketten mit Tags an jene Bäume hängen, die sich bereits als Christbäume in diesem Jahr eignen. Beispielsweise könnten rote RFID-Etiketten Tannen mit einer Qualität 1 einer Größe von 2m bis 2,5m kennzeichnen und grüne RFID-Etiketten Fichten mit einer Größe von 1,5m bis 2m. Weitere Farbkennungen bzw. Größenklassencodierungen (1=<1m, 2=1-1,25m,.... 9= >2,25m) der RFID-Etiketten würden weitere Baumarten und/oder Größen der Bäume und/oder Wiederverkäufer (Kunden) der Bäume kennzeichnen. In den RFID-Etiketten sind Tags enthalten, in denen Pflanzdaten gespeichert sind, die die jeweilige Kennzeichnung des Baumes elektronisch enthalten. Also in dem Tag des roten RFID-Etikettes wären Pflanzdaten gespeichert, die den Baum als eine Tanne mit einer Größe von 2m bis 2,5m kennzeichnen.

Nachdem die Arbeiter im Sommer durch die Plantage gegangen sind und alle als Christbäume in diesem Jahr verkaufbaren Bäume mit RFID-Etiketten gekennzeichnet haben, fährt der der Traktorfahrer mit dem Traktor die Plantage ab und registriert alle Tags in den RFID-Etiketten an den Bäumen in dem System. Da zuvor keine Tags in dem System registriert waren ist hierdurch auch gleich eine erste Inventur der verkaufbaren Bäume erhalten. Der Plantagenverwalter weiß hierdurch unmittelbar, dass beispielsweise 1.325 Bäume dieses Jahr als Christbäume verkauft werden können und, dass hierbei beispielsweise 223 Tannen mit einer Größe von 2m bis 2,5m umfasst sind. Hierdurch sind die Verwaltung der Bäume auf der Plantage, die Planbarkeit/Erfüllbarkeit von Kundenbestellungen, die Logistik, die Kommissionierung und der Verkauf der Bäume wesentlich vereinfacht. Auch während der Ernte erhält der Plantagenverwalter/Logistiker bei jeder Durchfahrt der Plantage mit dem Traktor eine aktuelle Inventur, welche verkaufbaren Bäume noch in der Plantage stehen.

Es kann erwähnt werden, dass die Pflanzenbearbeitungsmaschine nicht durch einen Traktor gebildet sein muss. Beispielsweise wäre es möglich, dass in den Pflanzreihen Schienen gelegt wurden, auf denen ein von dem Computer automatisch angetriebener Motorschlitten die Pflanzreihen abfährt und Arbeitsvorgänge selektiv durchführt.

Es kann erwähnt werden, dass die Schneideinrichtung auch zum automatischen Beschneiden der Form von Pflanzen ausgebildet sein kann. So könnten beispielsweise einzelne der Bäume 2 durch die Baumart der Buchsbäume gebildet sein und die Schneideinrichtung 16 könnte selektiv diese Bäume 2 in eine Kegelform/Kugelform beschneiden. Das automatische Beschneiden der Bäume 2 kann erst durch vorstehend beschriebene Positionsbestimmung des Tags 3 am Baum 2 durch die Ferritantennen F realisiert werden. Wenn also ein Buchsbaum in eine Kegelform beschnitten werden soll, dann ist dies unter Berücksichtigung der Position des Stammes des Buchsbaums maschinell durchführbar.

Es kann erwähnt werden, dass nicht unbedingt RFID-Antennen 6 und je Schneideinrichtung 16 zusätzlich je eine Ferritantenne F vorgesehen sein müssen. Es sind dem Fachmann Techniken bekannt den Lesebereich einer RFID-Antenne einzuschränken. Somit könnte vorerst mit den RFID-Antennen 6 mit ihren überlappenden Lesebereichen 7 die Tags 3 auf den Bäumen 2 detektiert werden und dann, wenn einer der Bäume 2 geschnitten werden soll, die Lesereichweite 7 der RFID-Antenne 6, die den Tag 3 des zu schneidenden Baumes 2 detektiert hat, zu einer schmalen Lesereichweite eingeschränkt werden, um die exakte Position des Tags 3 zu detektieren. Hierdurch wäre eine kostengünstige Ausführungsvariante der Erfindung erhalten.

Es kann erwähnt werden, dass Pflanzenbearbeitungseinrichtungen unterschiedliche Arbeitsvorgänge durchführen können. So könnte eine Pflanzenbearbeitungseinrichtung beispielsweise zum Setzen von Stecklingen von Pflanzen ausgebildet sein. Die Pflanzenbearbeitungseinrichtung könnte an Positionen in den Pflanzreihen, an denen kein Tag detektiert wird, die also frei sind, einen Steckling pflanzen. Diese Pflanzenbearbeitungsmaschine könnte auch gleich automatisch den Tag an der Spitze des Stecklings befestigen und die Pflanzdaten im System registrieren.

Es kann erwähnt werden, dass mehrere Pflanzenbearbeitungseinrichtungen (z.B. Spritzdüsen; Schneideinrichtungen, Pflanzeinrichtungen) einer RFID-Antenne und auch nur eine Pflanzenbearbeitungseinrichtung mehreren RFID-Antennen zugeordnet sein kann. Dies hängt vom jeweiligen Werkzeug und Bearbeitungsvorgang ab.

Es kann erwähnt werden, dass der oder die Ausleger der Pflanzenbearbeitungsmaschine auch über fünf, sieben oder sogar zwanzig Pflanzenreihen reichen können. Dies ist insbesondere bei kleinwüchsigen oder schmalwüchsigen Pflanzen möglich, da in diesem Fall die Pflanzenreihen sehr nah nebeneinander angelegt werden können. Weiters sind besondere Konstruktionen der Ausleger möglich, die besonders lang ausgeführt sind.

Es kann erwähnt werden, dass der Ausleger mit den Pflanzenbearbeitungseinrichtungen (z.B. Schnittwerkzeuge zum Beschneiden beziehungsweise zum Abschneiden der Pflanzen) auch am hinteren Teil des Traktors befestigt sein kann. Es könnte also nur ein am hinteren Teil des Traktors befestigter Ausleger sowohl links als auch rechts quer zur Fahrtrichtung von dem Traktor abstehen.

## Patentansprüche

1. System (1) zur Bearbeitung, Pflege und zum Management von Pflanzen (2), wobei an zu bearbeitenden Pflanzen (2) zumindest ein Radio Frequency Identification (RFID) Tag (3) angebracht ist und wobei eine Pflanzenbearbeitungsmaschine (4) zum Auslesen von in den Tags (3) gespeicherten Pflanzendaten einen RFID-Reader (5) und eine zugeordnete RFID-Antenne (6) aufweist und wobei die Pflanzenbearbeitungsmaschine (4) in Abhängigkeit von den ausgelesen Pflanzendaten eines Tags (3) einer Pflanze (2) zum selektiven Aktivieren eines Arbeitsvorganges der Pflanzenbearbeitungsmaschine (4) für diese Pflanze (2) ausgebildet ist, **dadurch gekennzeichnet, dass**
die Pflanzenbearbeitungsmaschine (4) zumindest einen im Wesentlichen quer zur Fahrtrichtung von der Pflanzenbearbeitungsmaschine (4) abstehenden, in einem Bearbeitungsabstand (BA1; BA2) zum Boden (10), im Wesentlichen parallel zum Boden (10) verlaufenden Ausleger (8, 9; 14, 15) aufweist, an dem eine Pflanzenbearbeitungseinrichtung (12, 13; 16, 17, 18) vorgesehen ist und an dem zumindest zwei zueinander in einem Antennenabstand (A) beabstandete RFID-Antennen (6) vorgesehen sind, und dass die Pflanzenbearbeitungsmaschine (4) in Abhängigkeit von den mit den beiden RFID-Antennen (6) ausgelesenen Pflanzendaten zum selektiven Aktivieren der Pflanzenbearbeitungseinrichtung (12, 13; 16, 17, 18) zur Durchführung des Arbeitsvorganges an der zu bearbeitenden Pflanze (2) und/oder zum Inventarisieren von ausgelesenen Pflanzendaten im System (1) ausgebildet ist.

2. System (1) gemäß Anspruch 1, **dadurch gekennzeichnet, dass** die Pflanzenbearbeitungsmaschine (4) einen Behälter (11) für Pflanzenbearbeitungsmittel, insbesondere Düngemittel (D) beziehungsweise Schädlingsbekämpfungsmittel, aufweist und dass an dem Ausleger (8, 9) Abgabeeinheiten (12) der Pflanzenbearbeitungseinrichtung zum Abgeben des Pflanzenbearbeitungsmittels vorgesehen sind, wobei jede Abgabeeinheit (12) zumindest einer RFID-Antenne (6) zugeordnet ist, und dass die Pflanzenbearbeitungsmaschine (4) in Abhängigkeit von den mit den RFID-Antennen (6) ausgelesenen Pflanzendaten zum Aktivieren der zugeordneten Abgabeeinheit (12) zur Abgabe des Pflanzenbearbeitungsmittels (D) an die dafür vorgesehenen Pflanzen (2) ausgebildet ist.

3. System (1) gemäß Anspruch 1, **dadurch gekennzeichnet, dass** an dem Ausleger (14, 15) Schneideinheiten (16) der Pflanzenbearbeitungseinrichtung zum Beschneiden und/oder Abschneiden der Pflanzen (2) vorgesehen sind, wobei jede Schneideinheit (16) zumindest einer RFID-Antenne (6) zugeordnet ist, und dass die Pflanzenbearbeitungsmaschine (4) in Abhängigkeit von den mit den RFID-Antennen (6) ausgelesenen Pflanzendaten zum Aktivieren der zugeordneten Schneideinheit (16) zum Beschneiden und/oder Abschneiden der dafür vorgesehenen Pflanzen (2) ausgebildet ist.

4. System (1) gemäß Anspruch 3, **dadurch gekennzeichnet, dass** zumindest eine RFID-Antenne (F) mit Richtcharakteristik, insbesondere eine Ferritantenne, vorgesehen ist, die zum Detektieren der genauen Position des Tags (3) und damit zur genauen Erkennung der Pflanzenmitte der zu beschneidenden und/oder abzuschneidenden Pflanze (2) ausgebildet ist, und dass die Schneideinheit (16) beim Schneidvorgang unter Berücksichtigung der detektierten Position des Tags (3) positionierbar ausgebildet ist.

5. System (1) gemäß einem der vorherigen Ansprüche, **dadurch gekennzeichnet, dass** nur ein RFID-Reader (5) vorgesehen ist, der mit allen an dem Ausleger (8, 9; 14, 15) vorgesehenen RFID-Antennen (6) zusammenwirkt, um die Tags (3) in den Lesebereichen (7) der RFID-Antennen (6) auszulesen.

6. System (1) gemäß einem der vorherigen Ansprüche, **dadurch gekennzeichnet, dass** die Pflanzenbearbeitungsmaschine (4) zwei gegenüberliegende, im Wesentlichen quer zur Fahrtrichtung von der Pflanzenbearbeitungsmaschine (4) abstehende, in dem Bearbeitungsabstand (BA1; BA2) zum Boden (10), im Wesentlichen parallel zum Boden (10) verlaufende Ausleger (8, 9; 14, 15) aufweist, wobei die beiden Ausleger insbesondere als nur ein am hinteren Teil der Pflanzenbearbeitungsmaschine angebrachter Querausleger ausgeführt sind.

7. System (1) gemäß einem der vorherigen Ansprüche, **dadurch gekennzeichnet, dass** die Tags (3) im Wesentlichen an der oberen Hälfte der Pflanzen (2) angebracht sind und dass die Lesereichweite (7) der RFID-Antennen (6) so justiert ist, beziehungsweise der Bearbeitungsabstand (BA1; BA2) so eingestellt ist, dass die Lesereichweite (7) der RFID-Antennen (6) nicht bis zum Boden (10) reicht.

8. System (1) gemäß einem der Ansprüche 7, **dadurch gekennzeichnet, dass** der Antennenabstand (A) zwischen den RFID-Antennen (6) derart festgelegt ist, dass die Lesereichweiten (7) der RFID-Antennen (6) die gesamte Länge der Ausleger (8, 9; 14, 15) lückenlos abdecken.

9. System (1) gemäß einem der vorherigen Ansprüche, **dadurch gekennzeichnet, dass** zumindest ein Positionsbestimmungsmittel (19) an der Pflanzenbearbeitungsmaschine (4) und/oder zumindest ein Positionsbestimmungsmittel (19) an dem Ausleger (14, 15) vorgesehen ist, das zum Ermitteln aktueller GPS-Positionsdaten ausgebildet ist, wobei die Pflanzenbearbeitungsmaschine (4) zum zugeordneten Speichern der ausgelesenen Pflanzendaten und ermittelten GPS-Positionsdaten ausgebildet ist.

10. Pflanzenbearbeitungsmaschine (4) zur Bearbeitung, Pflege und zum Management von Pflanzen (2), **dadurch gekennzeichnet, dass** die Maßnahmen gemäß einem der Ansprüche 1 bis 9 bei der Pflanzenbearbeitungsmaschine (4) vorgesehen sind.
